# FASCICULE DE BREVET EUROPEEN

(11) **EP 2 161 544 B1**
(45) Date de publication et mention de la délivrance du brevet: **13.04.2011**
(21) Numéro de dépôt: 09167700.5
(22) Date de dépôt: 12.08.2009
(51) Int. Cl.: G01C 23/00

(54) **Dispositif de visualisation pour aéronef comprenant des moyens d'affichage de balises de radionavigation et procédé associé**
Anzeigevorrichtung für Luftfahrzeug, das Markieranzeigemittel zur Funknavigation enthält und entsprechendes Verfahren
Viewing device for an aircraft comprising means for displaying radio-navigation beacons and associated method

(30) Priorité: 05.09.2008 FR 0804887
(43) Date de publication de la demande: 10.03.2010
(73) Titulaire: Thales, 92200 Neuilly Sur Seine (FR)
(72) Inventeur: Bacabara, Corinne, 31770 Colomiers (FR); Nouvel, Christian, 33700 Merignac (FR); Perbet, Jean-Noël, 33320 Eysines (FR)
(74) Mandataire: Bréda, Jean-Marc

(56) Documents cités:
- WO-A-2004/034373
- US-A1- 2005 200 502

## Description

Le domaine technique général de l'invention est celui des systèmes de vision synthétique encore appelés SVS, acronyme de Synthetic Vision Systems utilisés plus particulièrement en aéronautique pour présenter au pilote des informations concernant le pilotage ou la navigation de la façon la plus ergonomique possible. Dans le cas présent, la représentation graphique concerne l'affichage des balises de radionavigation.

Les dispositifs d'affichage de type SVS permettent aux pilotes d'avoir une meilleure conscience des dangers environnants tels que les collisions avec le sol sans perte de contrôle, communément appelées CFIT signifiant « Controlled Flight Into Terrain ». Les CFIT sont la première cause d'accident catastrophique des avions civils. L'industrie aéronautique concentre ses efforts sur les moyens de les réduire voire de les éliminer définitivement. Généralement, les systèmes SVS permettent d'afficher un terrain synthétique ainsi que les obstacles naturels ou les constructions humaines en perspective. Ainsi, le pilote a une perception la plus réaliste possible du paysage extérieur. Classiquement, les données SVS sont affichés sur un écran communément appelé PFD signifiant « Primary Flight Display ».

Il est clair que la localisation des balises de radionavigation est cruciale pour la navigation. Or, Il est parfois difficile de faire le lien entre les données de radionavigation affichées sur l'écran « Navigation Display », les données de navigation disponibles sur les cartes aéronautiques et l'extérieur. Ceci est tout particulièrement vrai pour les aéronefs effectuant des vols à basse altitude comme les hélicoptères. Dans ce cas, les pilotes opèrent majoritairement en condition de vol à vue et peuvent voler à basse altitude dans un relief accidenté, qui masque parfois le signal des balises de radionavigation. Il est donc crucial que les balises de radionavigation puissent être affichées le plus lisiblement possible.

Le dispositif de visualisation selon l'invention permet de représenter d'une façon simple, lisible et intuitive les balises de radionavigation. Il met en oeuvre trois dispositions selon la distance de la balise au porteur. D'une part, lorsque la balise est trop éloignée, elle n'est pas représentée. Ensuite, lorsqu'elle se trouve à une distance moyenne, elle est représentée sous une forme symbolique et agencée de façon à être visible du pilote. Enfin, à courte distance, lorsqu'elle est à vue, la balise est représentée sous sa forme physique.

Plus précisément, l'invention a pour objet un système de visualisation de type à vision synthétique SVS, comprenant au moins une base de données de navigation, une base de données cartographiques d'un terrain, des capteurs de position, un capteur de balises de radionavigation, un calculateur électronique ou processeur, un moyen d'interface homme-machine et un écran d'affichage, le calculateur comprenant des moyens de traitement des différentes informations issues des bases de données, des capteurs et du moyen d'interface, lesdits moyens de traitement agencés de façon à fournir à l'écran d'affichage une image synthétique du terrain comportant une représentation des balises présentes sur ledit terrain, caractérisé en ce que, les balises présentes au-delà d'une première distance du système ne sont pas représentées, les balises présentes à une distance comprise entre la dite première distance et une seconde distance inférieure à la première distance sont représentées sous forme symbolique, les balises présentes à une distance inférieure à la seconde distance sont représentées sous forme physique.

Avantageusement, la représentation symbolique de la balise comporte trois parties, une partie basse située à l'emplacement conforme de la position de la balise sur le terrain, une ligne de jonction verticale et un symbole normalisé représentant la balise disposé au-dessus de la dite ligne de jonction. De plus, la représentation symbolique peut comporter une indication de la fréquence d'émission de la balise.

Plus précisément, la ligne de jonction a une taille suffisante de façon que le symbole normalisé domine le terrain environnant et ne soit pas masqué par le relief. De plus, à partir d'une certaine distance, la représentation symbolique a une taille d'affichage apparente représentative d'une taille constante sur le terrain.

Avantageusement, la représentation symbolique de la balise subit un changement d'aspect selon que le signal émis par la balise est capté ou non. Ce changement d'aspect peut être soit un clignotement, soit un changement de couleur, soit un changement de la nature du trait (en pointillés ou en traits pleins).

Avantageusement, la représentation physique de la balise est représentative de l'aspect extérieur de la balise.

De plus, la représentation des balises peut être effectuée en semi-transparent.

L'invention concerne également un procédé d'affichage de balises de radionavigation pour système de visualisation de type à vision synthétique SVS monté sur porteur, ledit système comprenant au moins une base de données de navigation, une base de données cartographiques d'un terrain, des capteurs de position, un capteur de balises de radionavigation, un calculateur électronique, un moyen d'interface homme-machine et un écran d'affichage, le calculateur comprenant des moyens de traitement des différentes informations issues des bases de données, des capteurs et du moyen d'interface, lesdits moyens de traitement agencés de façon à fournir à l'écran d'affichage une image synthétique du terrain comportant une représentation des balises présentes sur ledit terrain, caractérisé en ce que le procédé comporte les étapes suivantes :
Recherche des balises présentes en deçà d'une première distance du porteur en fonction des bases de données et de la position du porteur ;
Détermination pour les balises trouvées de la distance des dites balises ;
Pour les balises présentes à une distance comprise entre la dite première distance et une seconde distance inférieure à la première distance, affichage des dites balises sous forme symbolique ;
Pour les balises présentes à une distance inférieure à la seconde distance, affichage des dites balises sous forme physique.

L'invention sera mieux comprise et d'autres avantages apparaîtront à la lecture de la description qui va suivre donnée à titre non limitatif et grâce aux figures annexées parmi lesquelles :
La figure 1 représente le diagramme d'un système de visualisation selon l'invention ;
Les figures 2 et 3 représentent l'affichage sous forme symbolique d'une balise de radionavigation située à une première distance du porteur dans deux configurations différentes ;
La figure 4 représente des symboles de balises de radionavigation figurant sur les légendes des cartes aéronautiques, ces symboles sont issus de la réglementation française ;
La figure 5 représente l'affichage sous forme physique d'une balise de radionavigation située à une seconde distance du porteur ;
La figure 6 représente l'organigramme du procédé d'affichage selon l'invention.

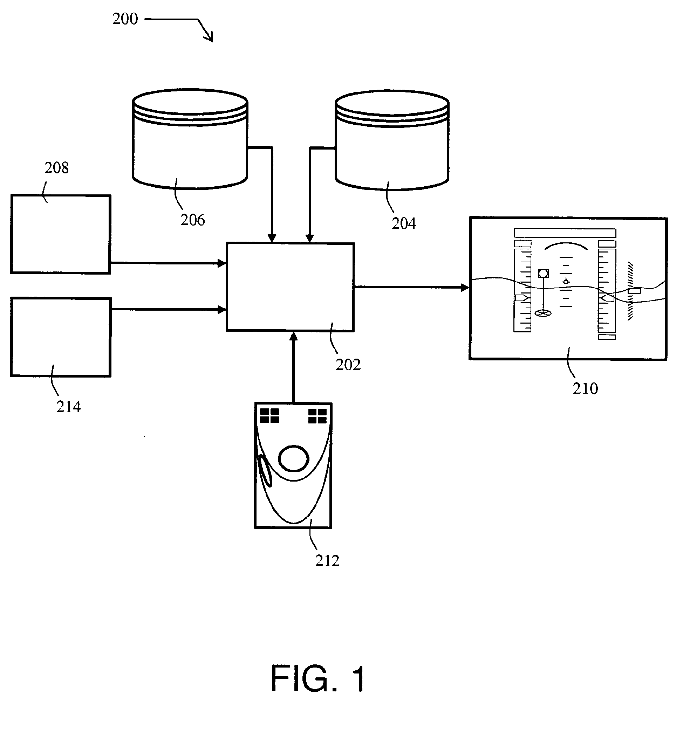

A titre d'exemple, la figure 1 représente un mode de réalisation possible d'un système selon l'invention pour des applications aéronautiques. Le système d'affichage graphique 200 est implanté dans un aéronef et comprend un calculateur ou un processeur 202 configuré pour fournir à un écran de visualisation 210 les informations à afficher.

Une ou plusieurs sources de données sont reliées au processeur 202. Ces sources de données incluent une première base de données de terrain 206 utilisée pour le tracé de la vue en perspective et une seconde base de données de navigation 204 comprenant les balises de radionavigation telles que les balises dites VOR (Very High Frequency Omnidirectional Range), DME (Distance Measuring Equipment) ou ADF (Automatic Direction Finder). Ces bases de données sont généralement positionnées dans l'aéronef. Les données peuvent également provenir du sol par des moyens de transmission ou « data link ». De plus, ces données peuvent être stockées sur différents périphériques tels que des disquettes, des disques durs, des CD-ROM, des mémoires volatiles, des mémoires non volatiles, des RAM ou tous autres moyens permettant le stockage de données.

Le système d'affichage comprend également des capteurs de positionnement 208 et des capteurs des balises de radionavigation 214. Des moyens d'interface homme machine et de contrôle 212 complètent le système. Ces moyens sont, par exemple, comme représenté sur la figure 1, des CCD (Cursor Control Device), moyens proches des « souris » informatiques. Ils peuvent être également des postes de commande, des boutons, des potentiomètres, ....

Le processeur 202 est interfacé avec des composants hardware qui fournissent un rendu graphique. Par exemple, ces composants hardware sont un ou plusieurs microprocesseurs, des mémoires, des appareils de stockage, des cartes d'interfaces ou tous autres composants standards. De plus, le processeur 202 fonctionne avec des logiciels ou « software » ou des micro-logiciels ou « firmware ». Il est capable de lire des instructions machine pour réaliser diverses tâches, calculs et fonctions de contrôle et générer les signaux à afficher et les autres données utilisées par l'écran d'affichage. Ces instructions peuvent être stockées sur des disquettes, des disques durs, des CD-ROM, des mémoires volatiles, des mémoires non volatiles, des RAM ou tous autres moyens permettant le stockage de données. Tous ces moyens sont connus de l'homme du métier.

L'écran d'affichage 210 peut être un écran à tube cathodique de type CRT, un écran à cristaux liquides de type LCD ou tout autre type d'écran. L'écran d'affichage est généralement un écran de planche de bord. Mais, l'affichage n'est pas limité à ce seul type d'écran. Ainsi, l'écran d'affichage 210 peut être la source d'images d'un viseur tête haute, connu sous l'acronyme anglo-saxon de HUD signifiant « Head-Up Display » ou faire partie d'une optique de visualisation de casque ou de jumelles à vision nocturne dite JVN. Cet écran d'affichage 210 peut être aussi dédié à un système de projection d'images sur pare-brise.

Le processeur 202 fournit les données à afficher à l'écran d'affichage 210 basées sur la position de l'avion issue des capteurs de positionnement 208, les bases de données de terrain 206 et les données des balises de radionavigation 204. Le processeur 202 est configuré pour recevoir et calculer les données avion à savoir sa position en latitude/longitude, sa vitesse, son cap, ... à partir de la localisation courante de l'avion issue des capteurs de positionnement 208 qui peuvent être, par exemple, une centrale à inertie ou un système de type GPS (Global Positioning System).

Basé sur les données de position, le processeur 202 obtient les données de terrain à partir de la base de données terrain 206. Il les envoie à l'écran d'affichage 210 pour représenter une image synthétique.

La base de données de navigation 204 regroupe les informations sur les balises de radionavigation à savoir leur position, par exemple en latitude/longitude, la fréquence d'utilisation ou le type des balises (ADF, VOR, DME, ...). Cette base de données peut être, par exemple, inclue dans le système de management de vol ou FMS (Flight Management system). Le processeur 202 peut prendre les données concernant les balises dans la base de données de navigation mais elles peuvent lui être directement fournies par les instruments à bord de l'aéronef comme le FMS ou par des sources extérieures via des data links ou des capteurs.

Le processeur 202 analyse les données issues de la base de données de navigation et détermine si les balises de radionavigation sont à une distance inférieure à une distance d1 sélectionnée à partir de l'aéronef. Cette distance d1 est, par exemple, de 18 523 métis (10 NM). Les balises de radionavigation qui sont à des distances supérieures à cette distance ne sont pas affichées. Cette fonction a le double avantage de limiter la charge de travail du processeur et d'améliorer la lisibilité de l'image en réduisant le nombre de symboles affichés, opération connue sous le terme de « declutter », puisqu'elle n'affiche que les balises de radionavigation utiles au pilote de l'aéronef. La distance d1 sélectionnée peut être soit imposée par l'équipage à travers le moyen de contrôle 212 ou être une distance calculée par le processeur 202 en prenant en compte plusieurs critères tels que la vitesse de l'aéronef, la taille de l'aéronef, la taille de l'écran 210 ou tous autres critères.

De même, le processeur 202 choisit d'afficher soit la représentation physique des radiobalises entre l'aéronef et la distance d2, soit la représentation symbolique entre d2 et la distance d1. La distance d2 peut être ou imposée par l'équipage à travers le moyen de contrôle 212 ou être une distance calculée par le processeur 202 en prenant en compte plusieurs critères tels que la vitesse de l'aéronef, la taille de l'aéronef, la taille de l'écran 210 ou tous autres critères. A titre d'exemple, d2 peut être de 1 NM. Pour faciliter la tâche du pilote, la visualisation conforme des balises de radionavigation dans ce système SVS est réalisée. Le pilote peut ainsi mieux se repérer et naviguer plus facilement. De plus, sa charge de travail est allégée.

La vue perspective peut être égocentrique, c'est-à-dire vue de la position courante de l'aéronef ou exocentrique, c'est-à-dire vue à partir d'un point autre que la position courante de l'aéronef. L'utilisateur peut choisir entre ces deux modes de représentation à travers le moyen de contrôle 212. L'affichage ou non des balises de radionavigation peut se faire à partir des moyens de contrôle 212. Les moyens de contrôle 212 permettent au pilote d'avoir la possibilité d'alléger la représentation sur l'écran, opération connue sous la terminologie « declutter » si un trop grand nombre de balises est affiché simultanément.

Le processeur 202 détermine la représentation des balises de radionavigation.

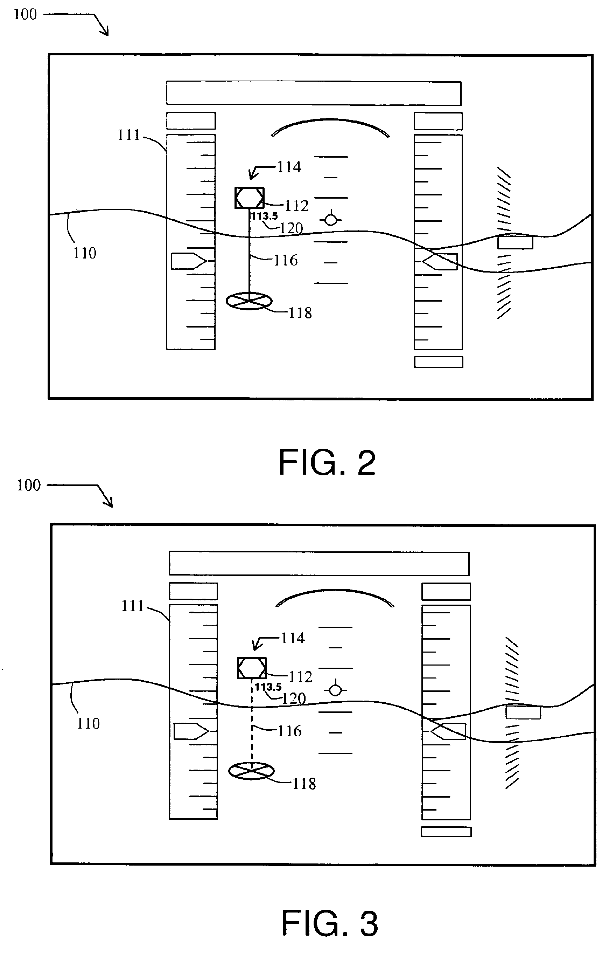

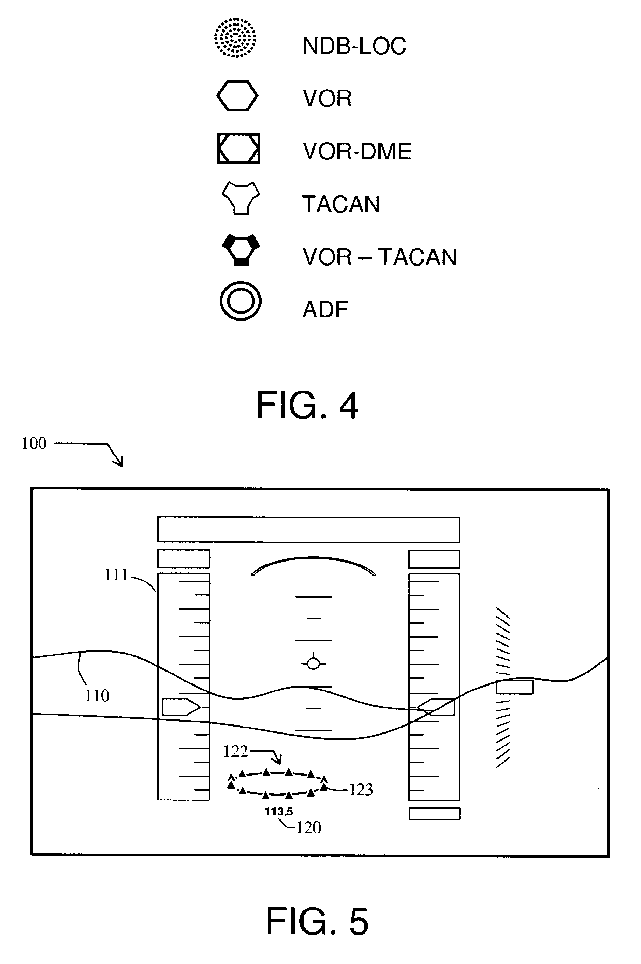

A titre d'exemples, les figures 2, 3 et 5 représentent des vues simplifiées des images 100 affichées par un dispositif selon l'invention. Sur ces figures, les lignes courbes en traits fins continus symbolisent une vue en perspective du relief du terrain 110 telle que vue par le pilote. Ces figures comportent également une symbologie 111 de type PFD, signifiant « Primary Flight Display » symbolisée essentiellement par des rectangles gradués dessinés en traits fins. Deux types de représentation sont envisageables : une représentation physique ou une représentation symbolique. Les figures 2 et 3 comportent une représentation symbolique d'une balise. La figure 5 comporte une représentation physique d'une balise de radionavigation. Sur les figures, les balises sont représentées en traits gras.

Sur ces deux types de représentation, un jeu sur la transparence de ces symboles peut être effectué afin de ne pas interférer avec la lecture d'autres symbologies comme celles classiques du PFD. Elle peut être fixée par exemple à 50%. La couleur de ces symboles par défaut est le blanc-gris utilisé pour le tracé de la symbologie classique. Cette couleur peut être différente, à condition que le respect des normes aéronautiques soit assuré.

Seules les balises présentes entre l'aéronef et une première distance d1 sélectionnée sont représentées. Cette distance d1 peut être soit sélectionnée par le pilote, soit déterminée par le calculateur en fonction de la vitesse de l'aéronef, de son altitude,.... Elle est de 10 Nautical Miles (18 523 mètres) dans notre exemple. Cela permet au pilote de mieux être conscient des balises environnantes, de déterminer ainsi plus aisément sa position et d'obtenir plus facilement ses références visuelles nécessaires à sa navigation.

Entre l'aéronef et une seconde distance d2, soit définie par l'opérateur, soit calculée par le processeur en fonction de l'altitude et de la vitesse de l'aéronef, la représentation physique est utilisée. Dans notre exemple de la figure 5, cette distance d2 peut être de 1 NM.

Entre la distance d2 et la distance d1, la représentation symbolique est utilisée. A titre d'exemples, les figures 2 et 3 comportent une représentation symbolique 114 d'une balise de radionavigation de type VOR-DME. La représentation symbolique d'une balise de radionavigation selon l'invention comporte trois parties, une partie basse 118 située à l'emplacement conforme de la position de la balise sur le terrain, une ligne de jonction verticale 116 et un symbole 112 représentant la balise disposé au-dessus de la dite ligne de jonction 116.

La représentation symbolique est tracée de manière conforme au paysage, à savoir qu'elle est positionnée à la position réelle de la balise sur le terrain. De plus, elle est représentée en perspective : plus la balise est située loin de l'aéronef, plus la représentation symbolique est petite.

Les symboles 112 peuvent être issus soit d'une réglementation ou être quelconques. Dans ce dernier cas, il est nécessaire de former l'équipage à leur reconnaissance et à leur interprétation. Il est plus intéressant d'utiliser des symboles normalisés, immédiatement identifiables par le pilote. Il est à noter que le symbole normalisé est issu d'une réglementation particulière en vigueur dans un pays donné. Elle peut différer d'un pays à l'autre. A titre d'exemple, la figure 4 représente certains symboles 112 de balises issus de la réglementation française que l'on peut retrouver sur les légendes des cartes aéronautiques. Sur la colonne de gauche de la figure 4, sont figurés les symboles et en regard, sur la colonne de droite, les acronymes des balises qu'ils représentent. Les symboles utilisés sont donnés à titre d'exemple et peuvent être complètement différents pour une application dans un autre pays tels que les Etats-Unis, le Royaume Uni, .... Dans l'exemple des figures 2 et 3, une balise VOR-DME 112 est représentée par un hexagone situé dans un rectangle.

Cette partie haute du symbole 114 est représentée à une certaine hauteur h1 par rapport au sol. Cette hauteur est calculée par le processeur suivant l'altitude et la vitesse de l'aéronef, le terrain environnant,... de façon que le symbole soit toujours visible du pilote. Elle est reliée au terrain par une ligne de jonction 116.

Cette ligne de jonction 116 peut être représentée avec une épaisseur de trait plus ou moins grande. A partir d'une certaine distance, la hauteur h1 est fixe pour permettre un meilleur discernement de l'objet et de mieux prendre conscience de la perspective et du type de balise, en sachant que la balise peut être masquée par le relief du terrain. On choisit cette hauteur h1 fixe minimale en fonction de la mission, du type de terrain,.... Dans notre exemple, cette hauteur h1 est de l'ordre de 50 pieds.

La partie basse 118 du symbole est située au « sol » synthétique et est positionnée en fonction de la position de la balise issue des bases de données de navigation. A titre d'exemple, cela peut être, comme représentée sur les figures 2 et 3, une ellipse munie d'une croix centrale pour mieux corréler la position de la balise au sol avec la localisation extérieure de celle-ci.

Le processeur 202 utilise également la donnée de validité sur la réception du signal de la radiobalise issue des capteurs de balises radionavigation 214 pour modifier la représentation symbolique de la balise qui subit un changement d'aspect selon que le signal émis par la balise est capté ou non. Ce changement d'aspect peut être soit un clignotement, soit un changement de couleur, soit un changement de style des lignes composant la représentation. Par exemple, si le signal est capté, alors la ligne de jonction du symbole de la représentation symbolique est représentée en traits continus comme représenté sur la figure 2, sinon elle l'est en pointillés comme représenté sur la figure 3. Ce changement d'état permet de valider la bonne réception du signal issu de la balise de radionavigation.

La valeur 120 de la fréquence de la balise de radionavigation est affichée près de la partie haute du symbole 114, de préférence en bas à droite de cette partie haute. Sur les figures 2, 3 et 5, cette fréquence vaut 113.5 MHz. Cependant, un algorithme de positionnement de label peut y être appliqué afin que ce label n'entre pas en conflit avec, par exemple, la symbologie classique du PFD. Il faut éviter toute superposition entre la symbologie classique et l'indication de cette fréquence pour ne pas induire le pilote en erreur lors de la lecture des paramètres du PFD.

Si la balise de radionavigation est proche de l'aéronef, une représentation physique 122 de la balise est réalisée comme illustré en figure 5. Cette représentation correspond à l'apparence de la balise physique installée dans le monde réel. Dans l'exemple de la figure 5, la balise représentée est du type VOR Doppler 122. Ce type de balise comporte généralement douze émetteurs coniques identiques répartis régulièrement sur une circonférence. Sur la figure 5, ces émetteurs sont représentés par des triangles 123.

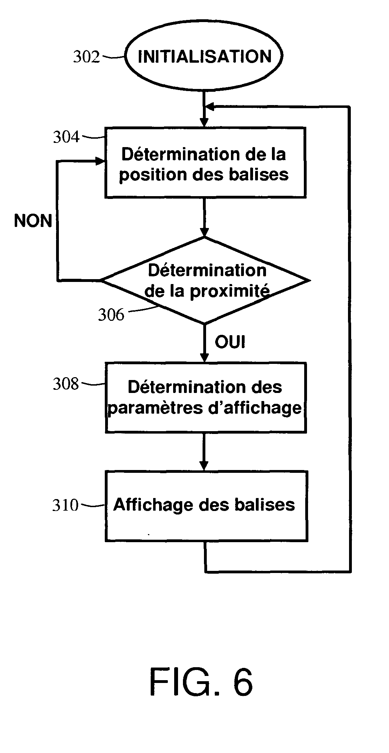

La figure 6 est un exemple d'organigramme du procédé selon l'invention pour l'affichage des balises de radionavigation en vue perspective. Cet organigramme comprend les étapes suivantes :
Etape 302 : initialisation de l'affichage.
Etape 304 : les balises de radionavigation proches de la position de l'aéronef sont recherchées. Cette recherche est accomplie, par exemple, en utilisant un ou plusieurs processeurs qui déterminent en fonction de la position courante de l'avion si des balises, présentes dans la base de données de navigation, sont dans un périmètre proche de l'avion.
Etape 306 : Le processeur détermine si les balises de radionavigation trouvées sont localisées entre la distance d1 sélectionnée et l'aéronef. Si les balises trouvées ne sont pas situées dans cette zone alors le processus retourne à l'étape 302 pour retrouver d'autres balises. Cette boucle de recherche des balises dans la zone voulue continue jusqu'à ce que des balises remplissent cette condition de localisation. Cette boucle permet de ne pas surcharger l'affichage écran. Comme l'utilisateur gère un large nombre d'informations, il est bénéfique de n'afficher que les balises qui représentent un intérêt.
Etape 308 : En comparant la distance d de la balise à l'aéronef à la distance sélectionnée d2 qui est, dans notre exemple, de 1852 mètres (1NM)
   - le processeur choisit le type de représentation, physique si d est inférieure à d2, symbolique dans le cas contraire.
   - Suivant le type de la balise, donnée qui est fournie par la base de données navigation, le processeur détermine le symbole à afficher ainsi que sa localisation à partir de la position fournie par la base de données.
   - Si le signal issu de la balise est capté ou non, alors la représentation symbolique est différente.
Etape 310: les balises sont affichées sur l'écran suivant la position, le type, etc. déterminé à l'étape précédente. Le processus se répète à partir de l'étape 304. Le taux de répétition peut être de 30 fois par seconde.

Le domaine d'applications principales du système et du procédé selon l'invention est l'aéronautique. Dans ce domaine, l'aéronef peut être à voilure tournante ou fixe. Bien entendu, l'aéronef peur être également un drone ou Unmanned Air Vehicles (UAV) commandé depuis le sol. Il est également possible d'utiliser ces principes pour tous véhicules utilisant des balises de radionavigation, comme certains véhicules terrestres ou certains navires.

## Revendications

1. Système de visualisation de type à vision synthétique SVS (200), comprenant au moins une base de données de navigation (204), une base de données cartographiques d'un terrain (206), des capteurs de position (208), un capteur de balises de radionavigation (214), un calculateur électronique (202), un moyen d'interface homme-machine (212) et un écran d'affichage (210), le calculateur comprenant des moyens de traitement des différentes informations issues des bases de données, des capteurs et du moyen d'interface, lesdits moyens de traitement agencés de façon à fournir à l'écran d'affichage une image synthétique du terrain (110) comportant une représentation (114, 122) des balises présentes sur ledit terrain, **caractérisé en ce que**, les balises présentes au-delà d'une première distance du système ne sont pas représentées, les balises présentes à une distance comprise entre la dite première distance et une seconde distance inférieure à la première distance sont représentées sous forme symbolique, les balises présentes à une distance inférieure à la seconde distance sont représentées sous forme physique.

2. Système de visualisation selon la revendication 1, **caractérisé en ce que** la représentation symbolique (114) de la balise comporte trois parties, une partie basse (118) située à l'emplacement conforme de la position de la balise sur le terrain, une ligne de jonction verticale (116) et un symbole normalisé (112) représentant la balise disposé au-dessus de la dite ligne de jonction.

3. Système de visualisation selon la revendication 2, **caractérisé en ce que** la représentation symbolique comporte en outre une indication (120) de la fréquence d'émission de la balise.

4. Système de visualisation selon la revendication 2, **caractérisé en ce que** la ligne de jonction (116) a une taille suffisante de façon que le symbole normalisé domine le terrain environnant et ne soit pas masqué par le relief.

5. Système de visualisation selon la revendication 2, **caractérisé en ce que**, à partir d'une certaine distance, la représentation symbolique a une taille d'affichage apparente représentative d'une taille constante sur le terrain.

6. Système de visualisation selon la revendication 2, **caractérisé en ce que**, la représentation symbolique de la balise subit un changement d'aspect selon que le signal émis par la balise est capté ou non.

7. Système de visualisation selon la revendication 6, **caractérisé en ce que** le changement d'aspect est soit un clignotement, soit un changement de couleur, soit un changement de nature de trait.

8. Système de visualisation selon la revendication 1, **caractérisé en ce que** la représentation physique (122) de la balise est représentative de l'aspect extérieur de la balise.

9. Système de visualisation selon la revendication 2, **caractérisé en ce que** la représentation des balises est effectuée en semi-transparent.

10. Procédé d'affichage de balises de radionavigation pour système de visualisation de type à vision synthétique SVS (200) monté sur porteur, ledit système comprenant au moins une base de données de navigation (204), une base de données cartographiques d'un terrain(206), des capteurs de position (208), un capteur de balises de radionavigation 214), un calculateur électronique (202), un moyen d'interface homme-machine (212) et un écran d'affichage (210), le calculateur comprenant des moyens de traitement des différentes informations issues des bases de données, des capteurs et du moyen d'interface, lesdits moyens de traitement agencés de façon à fournir à l'écran d'affichage une image synthétique du terrain (110) comportant une représentation des balises présentes sur ledit terrain, **caractérisé en ce que** le procédé comporte les étapes suivantes :
Recherche des balises présentes en deçà d'une première distance du porteur en fonction des bases de données et de la position du porteur ;
Détermination pour les balises trouvées de la distance des dites balises ;
Pour les balises présentes à une distance comprise entre la dite première distance et une seconde distance inférieure à la première distance, affichage des dites balises sous forme symbolique (114) ;
Pour les balises présentes à une distance inférieure à la seconde distance, affichage des dites balises sous forme physique (122).

## Claims

1. An SVS type synthetic vision display system (200), comprising at least one navigation database (204), a cartographic database of a terrain (206), position sensors (208), a radio navigation beacon sensor (214), an electronic computer (202), a man- machine interface (212) and a display screen (210), the computer comprising means for processing the different information originating from the databases, the sensors and the interface, said means for processing being arranged so as to provide the display screen with a synthetic image of the terrain (110) that comprises a representation (114, 122) of the beacons present on said terrain, **characterised in that** the beacons present beyond a first distance from the system are not shown, the beacons present at a distance between said first distance and a second distance below the first distance are shown in a symbolic form, and the beacons present at a distance below the second distance are shown in a physical form.

2. The display system according to claim 1, **characterised in that** the symbolic representation (114) of the beacon comprises three sections, a lower section (118) located at the site which corresponds to the position of the beacon on the terrain, a vertical connecting line (116) and a standardised symbol (112) representing the beacon disposed above said connecting line.

3. The display system according to claim 2, **characterised in that** the symbolic representation further comprises an indication (120) of the emission frequency of the beacon.

4. The display system according to claim 2, **characterised in that** the connecting line (116) is of sufficient size so that the standardised symbol dominates the surrounding terrain and is not obscured by the relief.

5. The display system according to claim 2, **characterised in that**, from a certain distance, the symbolic representation has an apparent display size which represents a constant size on the terrain.

6. The display system according to claim 2, **characterised in that** the symbolic representation of the beacon is subject to a change of appearance depending on whether the signal emitted by the beacon is captured.

7. The display system according to claim 6, **characterised in that** the change of appearance is either a flashing, or a change in colour, or a change in the type of line.

8. The display system according to claim 1, **characterised in that** the physical representation (122) of the beacon represents the external appearance of the beacon.

9. The display system according to claim 2, **characterised in that** the beacons are represented as semi-transparent.

10. A process for displaying radio navigation beacons for an SVS type synthetic vision display system (200) mounted on a carrier, said system comprising at least one navigation database (204), a cartographic database of a terrain (206), position sensors (208), a radio navigation beacon sensor (214), an electronic computer (202), a man- machine interface (212) and a display screen (210), the computer comprising means for processing the different information originating from the databases, the sensors and the interface, said means for processing being arranged so as to provide the display screen with a synthetic image of the terrain (110) comprising a representation of the beacons present on said terrain, **characterised in that** the process comprises the following steps:
- searching for beacons present below a first distance of the carrier based on the databases and the position of the carrier;
- determining the distance of beacons which are found;
- displaying in a symbolic form (114) those beacons that are present at a distance between said first distance and a second distance below the first distance;
- displaying in a physical form (122) those beacons that are present at a distance below the second distance.

## Patentansprüche

1. Anzeigesystem (200) des SVS-(Synthetic Vision System)-Typs, das Folgendes umfasst: wenigstens eine Navigationsdatenbank (204), eine kartografische Databank eines Geländes (206), Positionssensoren (208), einen Funknavigationsbakensensor (214), einen elektronischen Computer (202), eine Mensch-Maschine-Schnittstelle (212) und einen Anzeigeschirm (210), wobei der Computer Mittel zum Verarbeiten der verschiedenen Informationen umfasst, die von den Datenbanken, den Sensoren und der Schnittstelle kommen, wobei die Verarbeitungsmittel so ausgelegt sind, dass sie ein künstliches Bild des Geländes (110) zum Anzeigeschirm senden, das eine Darstellung (114, 122) der auf dem Gelände vorhandenen Baken enthält, **dadurch gekennzeichnet, dass** die jenseits einer ersten Entfernung von dem System vorhandenen Baken nicht gezeigt werden, die in einer Entfernung zwischen der ersten Entfernung und einer zweiten Entfernung, die geringer ist als die erste Entfernung, befindlichen Baken in symbolischer Form gezeigt werden und die in einer Entfernung, die geringer ist als die zweite Entfernung, vorhandenen Baken in einer physischen Form gezeigt werden.

2. Anzeigesystem nach Anspruch 1, **dadurch gekennzeichnet, dass** die symbolische Darstellung (114) der Bake drei Teile umfasst, einen unteren Teil (118), der sich an der Stelle befindet, die der Position der Bake in dem Gelände entspricht, eine vertikale Verbindungslinie (116) und ein über der Verbindungslinie angeordnetes standardisiertes Symbol (112), das die Bake darstellt.

3. Anzeigesystem nach Anspruch 2, **dadurch gekennzeichnet, dass** die symbolische Darstellung ferner eine Anzeige (120) der Sendefrequenz der Bake beinhaltet.

4. Anzeigesystem nach Anspruch 2, **dadurch gekennzeichnet, dass** die Verbindungslinie (116) eine Größe hat, die ausreicht, damit das standardisierte Symbol das umgebende Gelände dominiert und nicht von dem Relief verdeckt wird.

5. Anzeigesystem nach Anspruch 2, **dadurch gekennzeichnet, dass** die symbolische Darstellung ab einer bestimmten Entfernung eine scheinbare Anzeigegröße hat, die für eine konstante Größe in dem Gelände repräsentativ ist.

6. Anzeigesystem nach Anspruch 2, **dadurch gekennzeichnet, dass** das Aussehen der symbolischen Darstellung der Bake je nachdem verändert wird, ob das von der Bake gesendete Signal erfasst wird oder nicht.

7. Anzeigesystem nach Anspruch 6, **dadurch gekennzeichnet, dass** die Änderung des Aussehens entweder Blinken oder eine Farbänderung oder eine Änderung der Art der Linie ist.

8. Anzeigesystem nach Anspruch 1, **dadurch gekennzeichnet, dass** die physische Darstellung (122) der Bake das äußere Aussehen der Bake repräsentiert.

9. Anzeigesystem nach Anspruch 2, **dadurch gekennzeichnet, dass** die Baken teiltransparent dargestellt werden.

10. Verfahren zum Anzeigen von Funknavigationsbaken für ein Anzeigesystem (200) des SVS-(Synthetic Vision System)-Typs, das an einem Träger montiert ist, wobei das System Folgendes umfasst: wenigstens eine Navigationsdatenbank (204), eine kartographische Datenbank eines Geländes (206), Positionssensoren (208), einen Funknavigationsbakensensor (214), einen elektronischen Computer (202), eine Mensch-Maschine-Schnittstelle (212) und einen Anzeigeschirm (210), wobei der Computer Mittel zum Verarbeiten der verschiedenen Informationen umfasst, die von den Datenbanken, den Sensoren und der Schnittstelle kommen, wobei die Verarbeitungsmittel so ausgelegt sind, dass sie ein künstliches Bild des Geländes (110) zum Anzeigeschirm senden, das eine Darstellung der auf dem Gelände vorhandenen Baken umfasst, **dadurch gekennzeichnet, dass** das Verfahren die folgenden Schritte beinhaltet:
- Suchen nach Baken, die sich diesseits einer ersten Entfernung von dem Träger befinden, auf der Basis der Datenbanken und der Position des Trägers;
- Ermitteln der Entfernung von den Baken, die gefunden werden;
- Anzeigen der Baken, die sich in einer Entfernung zwischen der ersten Entfernung und einer zweiten Entfernung befinden, die geringer ist als die erste Entfernung, in einer symbolischen Form (114);
- Anzeigen der Baken, die sich in einer Entfernung befinden, die geringer als die zweite Entfernung ist, in einer physischen Form (122).
